# EUROPÄISCHE PATENTANMELDUNG

(11) **EP 0 756 116 A2**
(43) Veröffentlichungstag der Anmeldung: **29.01.1997**
(21) Anmeldenummer: 96100671.5
(22) Anmeldetag: 18.01.1996
(51) Int. Cl.: F16K 3/26

(54) **Absperrventil**

(30) Priorität: 28.07.1995 DE 19527760
(71) Anmelder: Schmidt & Lenhardt GmbH & Co. oHG, D-88316 Isny (DE)
(72) Erfinder: Janisch, Klaus, D-88316 Isny (DE)
(74) Vertreter: Hübner, Hans-Joachim, Dipl.-Ing.

(57) **Zusammenfassung**

Ein Absperrventil 10 dient zum Einsetzen in eine Öffnung 22 einer Hubplatte 20 eines Badelifters. An einer Halteplatte 12, die bodenseitig an der Hubplatte 20 angeschraubt wird, sind zwei abwärtsweisende Stirnwände 14 vorgesehen, in denen ein Ventilkörper 30 gehaltert ist, auf dem ein Steuerschieber 54 zwischen einer Offenstellung und einer Absperrstellung verschiebbar ist. Der Steuerschieber 54 hat einen nach oben weisenden breitflächigen Ansatz 58, der eine Rechtecköffnung 16 der Halteplatte 12 durchsetzt und nach oben herausragt. Der Ansatz bildet einen großflächigen Betätigungsgriff, der es Behinderten ermöglicht, das Absperrventil zu betätigen. An dem Ventilkörper 30 wird am einen Ende ein von einer Druckwasserversorgung abzweigender Schlauch angeschlossen. Das andere Ende des Ventilkörpers 30 weist ein Gewindestück 50 auf, auf das eine Schraubkupplung eines Handbrauseschlauches aufgeschraubt werden kann. Durch Verschieben des Steuerschiebers 54 kann die Handbrause aktiviert bzw. deaktiviert werden.

## Beschreibung

Die Erfindung betrifft ein Absperrventil zur Befestigung an einer Hubplatte eines Badelifters für Behinderte. Badelifter dieser Art sind vielfach bekannt. Sie weisen ein Bodengestell mit einer scherenarmartigen Führungseinrichtung für die Hubplatte und einen Hubschlauch auf, der an die Haushaltswasserleitung anschließbar ist und bei Wasserzufuhr die Hubplatte anhebt. Zur Steuerung ist an der Unterseite der Hubplatte ein Steuerventil befestigt, das das Füllen und Entleeren des Hubschlauches steuert. Dieses Steuerventil ist über einen Verbindungschlauch in der Regel an den Brauseanschluß der Badewannenarmatur angeschraubt. Die Handbrause selbst kann dann nicht benutzt werden.

Aufgabe der Erfindung ist es, ein Abschaltventil für die Hubplatte des Badelifters vorzusehen, an das die übliche Handbrause angeschlossen werden kann. Dabei soll das Absperrventil aus wenigen robusten Einzelteilen bestehen und sich an der Hubplatte so befestigen lassen, daß eine leichte Bedienung auch von einem Behinderten möglich ist.

Diese Aufgabe wird erfindungsgemäß dadurch gelöst , daß das Absperrventil eine längliche Halteplatte mit einer zentralen rechteckförmigen, an den Ecken gerundeten Öffnung sowie zwei rechtwinklig von der Halteplatte abstehenden Stirnwänden aufweist, daß die Stirnwände - in Längsrichtung gesehen - miteinander ausgefluchtete Bohrungen aufweisen, daß ein länglicher, in seinem Mittelbereich kreiszylindrischer Ventilkörper die Bohrungen der Stirnwände durchsetzt und an diesen mittels einer Schraubverbindung im Abstand von der Halteplatte und parallel zu dieser befestigt ist, daß der Ventilkörper von seinen beiden Stirnseiten ausgehende koaxiale Sacklöcher aufweist, an deren inneren Enden sich, an der Außenseite des Ventilkörpers mündende Radialbohrungen anschließen, daß auf dem Ventilkörper ein, diesen umgreifender Steuerschieber verschiebbar gelagert ist, der mindestens eine innere Ringnut aufweist, welche in einer Offenstellung des Absperrventils die Radialbohrungen beider Sacklöcher miteinander verbindet und daß der Steuerschieber einen radialen Ansatz als Betätigungsgriff aufweist, dessen Breite der lichten Weite der Öffnung in der Halteplatte entspricht, diese durchsetzt und aus dieser herausragt.

Abgesehen von den notwendigen Dichtungsringen besteht das gesamte Absperrventil prinzipiell aus vier Teilen, nämlich der Halteplatte, dem Ventilkörper, dem diesen an der Halteplatte festlegenden Schraubstück sowie dem Steuerschieber. Die Halteplatte ist so konfiguriert, daß sie in einer länglichen Öffnung der Hubplatte des Badelifters bodenseitig befestigt werden kann. Die Hubplatte hat also auf beiden einander gegenüberliegenden Seiten jeweils eine Öffnung, deren einer das Steuerventil für das Heben und Senken der Hubplatte und deren anderer das erfindungsgemäße Absperrventil zugeordnet ist. Die beiden Öffnungen in der Hubplatte sind gleich groß ausgebildet, sodaß es möglich ist, die beiden Ventile gegeneinander zu vertauschen. Das erfindungsgemäße Absperrventil hat eine etwas größere Breite als die Hubplattenöffnung, sodaß die Halteplatte des Absperrventils die Hubplatte an beiden Längsseiten überlappt. In diesen Bereichen befinden sich Befestigungsbohrungen, um das Absperrventil an der Bodenseite der Hubplatte anschrauben zu können. Die Halteplatte weist eine von ihren Stirnwänden abgewandte im Längsschnitt konkav gekrümmte Deckfläche auf. Die Dicke der Halteplatte ist also benachbart beider Schmalseiten größer als im Mittelbereich. Dadurch ergibt sich eine vertiefte Mulde, innerhalb deren der als Betätigungsgriff wirkende Ansatz nach oben steht und allenfalls unwesentlich über die Deckfläche der Hubplatte hinaus ragt. Da die Hubplatte in der Regel mit einer Polsterauflage versehen ist endet der Betätigungsansatz in jedem Fall unterhalb der Deckfläche einer solchen Polstermatte. Dies ist wesentlich, damit der Benutzer beim Ein- und Aussteigen in bzw. aus der Wanne durch den Betätigungsansatz nicht behindert wird. Andererseits wäre ein kleindimensionierter Betätigungsgriff für Behinderte ungeeignet, da diese ihre Körperbewegungen nur unvollkommen steuern können. Der erfindungsgemäße Betätigungsansatz reicht über die ganze Breite des in der Hubplattenöffnung freiliegenden Absperrventils und hat eine maßgebliche Höhe, die der im Scheitelpunkt der Mulde gemessenen Muldenhöhe wenigstens angenähert entspricht. Der Benutzer ist für die Betätigung des Absperrventils somit nicht auf seine Finger angewiesen, sondern kann dazu auch den Handballen und gegebenenfalls sogar den Ellenbogen verwenden.

Das Absperrventil ist bodenseitig über eine Verzweigung an die Druckwasserzufuhr angeschlossen, sodaß die Handbrause in Verbindung mit dem Badelifter jederzeit aktivierbar ist. Weitere Merkmale und Vorteile der Erfindung sind Gegenstände der Unteransprüche.

Anhand der Zeichnung, die ein Ausführungsbeispiel darstellt, wird die Erfindung näher beschrieben.

Es zeigt:
- Fig. 1: einen Längsschnitt durch das neuartige Absperrventil und

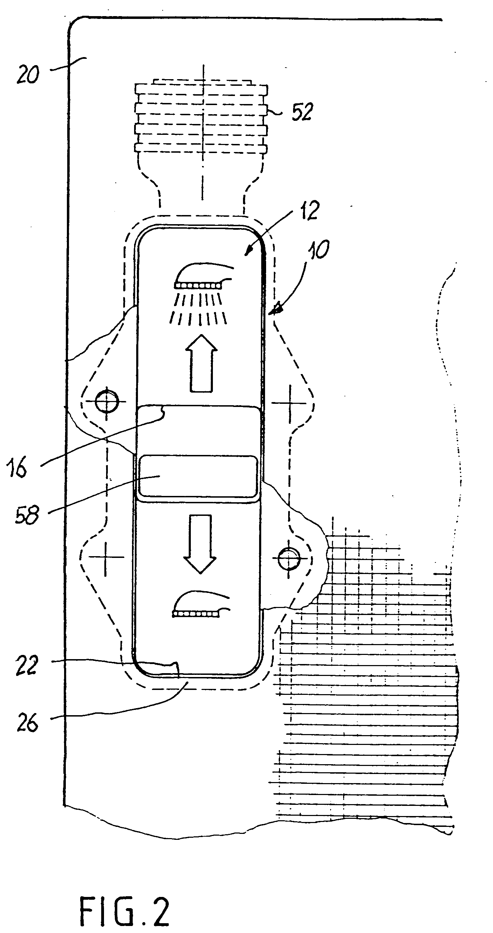

- Fig. 2: eine Draufsicht auf einen Eckbereich der Hubplatte mit an dieser befestigtem Absperrventil.

Das allgemein mit 10 bezeichneten Absperrventil weist eine Halteplatte 12 auf, von der zwei Stirnwände 14 rechtwinklig nach unten abstehen. Zwischen den Stirnwänden 14 hat die Halteplatte 12 eine rechteckförmige Öffnung 16. Die Halteplatte 12 wird mittels vier Schrauben 18 an der Unterseite einer Hubplatte 20 eines Badelifters angeschraubt, die eine an den Ecken gerundete Rechtecköffnung 22 aufweist, welche von der Halteplatte 12 in Längsrichtung und in Querrichtung überlappt wird. Innerhalb der Öffnung 22 weist die Halteplatte 12 eine Materialerhöhung 24 auf, deren Deckfläche im Längsschnitt konkav gekrümmt ist. Zwischen der Erhöhung 24 und der Halteplatte 12 wird ein ringsumlaufender Absatz 26 gebildet, mit dem die Halteplatte an der Unterseite der Hubplatte 20 anliegt. Die Erhöhung 24 paßt umrißmäßig genau in die Öffnung 22, sodaß die Halteplatte 12 an der Hubplatte 20 formschlüssig gehalten ist. Aufgrund der Oberflächenform der Erhöhung 24 ergibt sich eine Mulde 28, die im Bereich der Halteplattenöffnung 16 am tiefsten ist.

Die beiden Stirnwände 14 der Halteplatte 12, die in Anständen von deren Enden angeordnet sind, weisen koaxiale gleich große Bohrungen auf, die von einem Ventilkörper 30 durchsetzt werden. Dieser besteht aus Kunststoff und ist in seinem Mittelteil kreiszylindrisch konturiert. An dem Mittelteil schließt sich linksseitig ein im Durchmesser vergrößerter Bund 32 an, der in die Bohrung der Stirnwand 14 paßt. Daran schließt sich dann ein Ringflansch 34 an, der sich an der Stirnwand 14 abstützt. Der Ventilkörper 30 endet linksseitig in einem Schlauchstutzen 36. In dem Ventilkörper 30 sind zwei koaxiale Sacklöcher 38, 40 vorgesehen, die im Mittelbereich des Ventilkörpers 30 dicht benachbart voneinander enden. An diesen Enden münden Radialbohrungen 42, 44. Das rechtseitige Ende des Ventilkörpers 30 weist einen, auf kleinerem Durchmesser liegenden Gewindeabschnitt 46 auf, auf dem eine Scheibe 48 aufgeschoben ist, die an der Innenseite der rechtseitigen Stirnwand 14 anliegt. Ein Schraubstück 50 paßt in die Bohrung der Stirnwand und ist auf dem Gewindeabschnitt 46 des Ventilkörpers 30 aufgeschraubt. Ein Flansch des Schraubstückes 50 legt sich außenseitig an die rechtseitige Stirnwand 14 an, sodaß der Ventilkörper 30 an der Halteplatte 12 axial unverschiebbar befestigt ist. Das Schraubstück 50 hat endseitig ein Außengewinde 52, auf das ein Kupplungsstück eines herkömmlichen Brauseschlauches aufgeschraubt werden kann.

Auf dem Ventilkörper 30 ist zwischen den beiden Stirnwänden 14 der Halteplatte 12 ein Steuerschieber 54 verschiebbar gelagert, der aus einem rohrförmigen Bauteil 56 und einem radialen äußeren Ansatz 58 besteht. Das rohrförmige Baute 56 hat eine Durchgangsbohrung, welche dem Außendurchmesser des Ventilkörpers 30 entspricht. Von dieser Durchgangsbohrung ausgehend sind in dem Steuerschieber 54 zwei Ringnuten 60, 62 eingestochen. Drei O-Ringe 64 dichten die Ringnuten jeweils nach außen und gegeneinander ab.

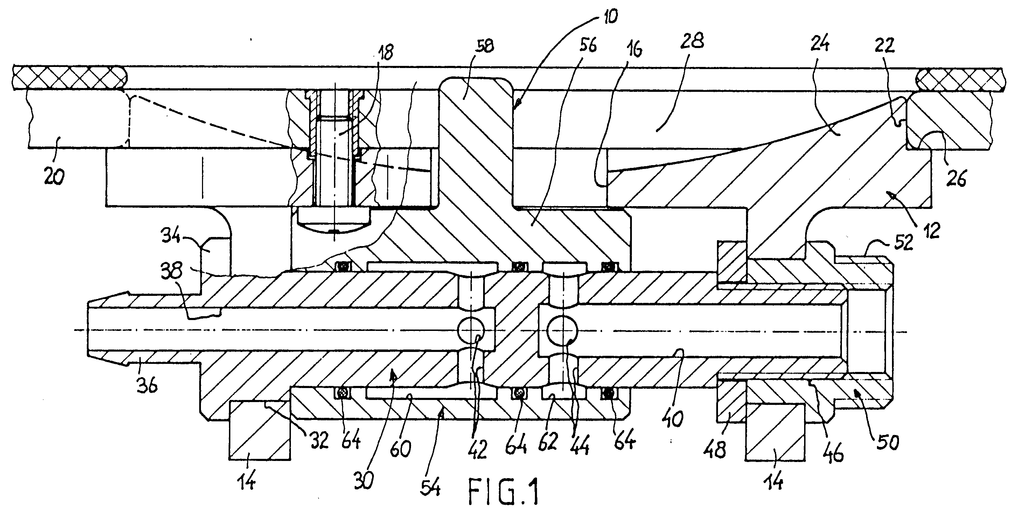

Der Steuerschieber 54 liegt bei der in Fig. 1 gezeigten Absperrstellung an der linksseitigen Stirnwand 14 an. Jede der beiden Ringkammern 60,62 kommuniziert dann mit den Radialbohrungen 42 bzw. 44 eines der beiden Sacklöcher 38,40. Die Breite der Ringnut 60 ist so gewählt, daß in der Offenstellung des Steuerschiebers 54 die Radialbohrungen 42,44 beider Sacklöcher 38,40 miteinander kommunizieren. In der Offenstellung liegt der Steuerschieber 54 an der Scheibe 48 der rechtseitigen Stirnwand 14 an.

Die Breite des Betätigungsansatzes 58 entspricht der Breite der Rechtecköffnung 16 in der Halteplatte 12 und die Höhe des Ansatzes 58 ist so gewählt, daß sie die an den Enden der Halteplatte 12 gemessene größte Höhe erreicht oder etwas übertrifft. Die Öffnung 16 liegt im Scheitelbereich des Muldenbodens, sodaß der Ansatz 58 eine größtmögliche Betätigungsfläche bietet.

Der rohrförmige Körper 56 des Steuerschiebers 54 könnte kreiszylindrisch ausgebildet sein, denn der in die Öffnung 16 passende Ansatz 58 würde nach der Montage eine Relativdrehung des Steuerschiebers 54 auf dem Ventilkörper 30 verhindern. Im Ausführungsbeispiel ist die Deckwand des rohrförmigen Bauteils 56 abgeflacht und liegt somit dicht parallel zur Bodenfläche der Halteplatte 12.

## Patentansprüche

1. Absperrventil zur Befestigung an einer Hubplatte eines Badelifters für Behinderte, **dadurch gekennzeichnet, daß** das Absperrventil (10) eine längliche Halteplatte (12) mit einer zentralen rechteckförmigen, an den Ecken leicht gerundeten Öffnung (16) sowie zwei rechtwinklig von der Halteplatte (12) abstehenden Stirnwänden (14) aufweist, daß die Stirnwände (14) - in Längsrichtung gesehen - miteinander ausgefluchtete Bohrungen aufweisen, daß ein länglicher, in seinem Mittelbereich kreiszylindrischer Ventilkörper (30) die Bohrungen der Stirnwände (14) durchsetzt und an diesen mittels einer Schraubverbindung (46, 50) im Abstand von der Halteplatte (12) und parallel zu dieser befestigt ist, daß der Ventilkörper (30) von seinen beiden Stirnseiten ausgehende koaxiale Sacklöcher (38, 40) aufweist, an deren einander zugewandten inneren Enden sich, an der Außenseite des Ventilkörpers (30) mündende Radialbohrungen (42, 44) anschließen, daß auf dem Ventilkörper (30) ein, diesen umgreifender Steuerschieber (54) verschiebbar gelagert ist, der mindestens eine innere Ringnut (60) aufweist, welche in einer Offenstellung des Absperrventils (10) die Radialbohrungen (42, 44) beider Sacklöcher (38, 40) miteinander verbindet und daß der Steuerschieber (30) einen radialen Ansatz (58) als Betätigungsgriff aufweist, dessen Breite der lichten Weite der Öffnung (16) in der Halteplatte (12) wenigstens annähernd entspricht, diese durchsetzt und aus dieser herausragt.

2. Absperrventil nach Anspruch 1, **dadurch gekennzeichnet, daß** die Halteplatte (12) benachbart ihrer beiden Längsseiten je mindestens eine Bohrung zur Befestigung der Halteplatte (12) an der Unterseite der Hubplatte (20) des Badelifters aufweist.

3. Absperrventil nach Anspruch 1 oder 2, **dadurch gekennzeichnet, daß** die Halteplatte (12) eine, von ihren Stirnwänden (14) abgewandte im Längsschnitt konkav gekrümmte Deckfläche aufweist.

4. Absperrventil nach einem der Ansprüche 1 bis 3, **dadurch gekennzeichnet, daß** der Ventilkörper (30) an einem stirnseitigen Ende einen Schlauchbefestigungsstützen (36) mit anschließendem Flansch (34) aufweist, der sich an einer der Stirnwände (14) der Halteplatte (12) abstützt, daß benachbart des Flansches (34) der kreiszylindrische Mittenabschnitt vorgesehen ist und daß am anderen Ende des Ventilkörpers (30) ein Gewindeabschnitt (46) vorgesehen ist, auf dem ein, sich an der anderen Stirnwand (14) der Halteplatte (12) abstützendes Schraubstück (50) aufgeschraubt ist, das ein Außengewinde (52) zum Aufschrauben einer Kupplung eines Handbrauseschlauches aufweist.

5. Absperrventil nach einem der Ansprüche 1 bis 4, **dadurch gekennzeichnet, daß** der Steuerschieber (54) mit Ausnahme seines radialen Ansatzes (58) kreiszylindrisch ausgebildet ist und daß der die Öffnung (16) der Halteplatte (12) durchsetzende Ansatz (58) den alleinigen Verdrehungsschutz des Steuerschiebers (54) bildet.

6. Absperrventil nach einem der Ansprüche 1 bis 5, **dadurch gekennzeichnet, daß** die Halteplatte (12) einen ringsumlaufenden Absatz (26) aufweist, mit dem die Halteplatte (12) an der Unterseite der Hubplatte (20) anliegt und daß der Absatz (26) innenseitig eine Erhöhung (24) begrenzt, die in die rechteckige Hubplattenöffnung (22) formschlüssig eingreift.

7. Absperrventil nach einem der Ansprüche 1 bis 6, **dadurch gekennzeichnet, daß** der Steuerschieber (54) zwei innere Ringnuten (60, 62) von unterschiedlicher axiale Länge aufweist und daß beidseitig jeder Ringnut (60, 62) jeweils ein O-Ring (64) in den Steuerschieber (54) eingesetzt ist.

8. Absperrventil nach einem der Ansprüche 1 bis 7, **dadurch gekennzeichnet, daß** die Halteplatte (12) benachbart ihrer Schmalseiten eine größere Dicke aufweist als im Mittelbereich.

9. Absperrventil nach einem der Ansprüche 1 bis 8, **dadurch gekennzeichnet, daß** die Dicke der Halteplatte (12) im Bereich ihrer Öffnung (16) höchstens halb so groß ist wie an ihren schmalseitigen Enden und daß der Ansatz (58) das Niveau dieser schmalseitigen Enden höchstens geringfügig überragt.

10. Absperrventil nach einem der Ansprüche 1 bis 9, **dadurch gekennzeichnet, daß** die Stirnwände (14) der Halteplatte (12) Anschläge für die Verschiebung des Steuerschiebers (54) bilden und jeweils in Abständen von den Enden der Halteplatte (12) angeordnet sind.
